# EUROPÄISCHE PATENTSCHRIFT

(11) **EP 1 854 821 B1**
(45) Veröffentlichungstag und Bekanntmachung des Hinweises auf die Patenterteilung: **22.10.2008**
(21) Anmeldenummer: 07106925.6
(22) Anmeldetag: 25.04.2007
(51) Int. Cl.: C08G 65/00, C08G 65/30

(54) **Verfahren zur Herstellung von Polyarylenetherketonen**
Process for preparing polyaryletherketones
Procédé pour préparer des polyaryléthercétones

(30) Priorität: 13.05.2006 DE 102006022442
(43) Veröffentlichungstag der Anmeldung: 14.11.2007
(73) Patentinhaber: Evonik Degussa GmbH, 45128 Essen (DE)
(72) Erfinder: Richter, Alexander, 45739, Oer-Erkenschwick (DE); Schiemann, Vera, 45772, Marl (DE); Günzel, Bernd, 45721, Haltern am See (DE); Jilg, Boris, 44791, Bochum (DE); Uhlich, Wilfried, 45768, Marl (DE)

(56) Entgegenhaltungen:
- EP-A1- 0 001 879
- EP-A2- 0 182 648
- DE-A1- 4 207 555

## Beschreibung

Gegenstand der Erfindung ist ein Verfahren zur Aufarbeitung des Reaktionsgemisches, das bei der Herstellung von Polyarylenetherketonen (PAEK) nach der sogenannten nucleophilen Route erhalten wird, unter Isolierung von reinem PAEK.

Die Herstellung von PAEK durch nucleophile Polykondensation von Bisphenolen und organischen Dihalogenverbindungen in einem geeigneten Lösemittel unter Verwendung von Alkali- oder Erdalkalicarbonaten ist ein bekannter Prozess, der in einer Vielzahl von Patentanmeldungen beschrieben ist, beispielsweise in EP-A-0 001 879, EP-A-0 182 648 und EP-A-0 244 167. Bei Durchführung dieses Verfahrens schließt sich nach dem Ende der Polykondensation immer eine sehr aufwendige Wäsche des Reaktoraustrags an. Die Wäsche hat zum Ziel, das Reaktionslösemittel, anorganische Salze, Restmonomere und andere Verbindungen aus dem PAEK zu entfernen. Im Laufe der Entwicklungsarbeiten an PAEK hat sich gezeigt, dass es für das Verfahren und die Produkteigenschaften vorteilhaft ist, wenn man als organische Dihalogenide Difluorverbindungen verwendet. Nachteilig bei der Verwendung der Difluorverbindungen ist jedoch die Bildung schwerlöslicher Alkali- oder Erdalkalifluoride als Nebenprodukte während der Reaktion. Darüber hinaus muss für die Lösungspolykondensation ein geeignetes Lösemittel in verhältnismäßig großen Mengen, bezogen auf den Gesamtreaktionsansatz, verwendet werden, um das entstehende Polymer auch bei höheren Molmassen in Lösung zu halten. In der Literatur wird für diesen Einsatz in den allermeisten Fällen Diphenylsulfon empfohlen.

Naturgemäß bereiten die oben erwähnten Nebenprodukte bzw. das Lösemittel Diphenylsulfon bei der Aufarbeitung des Reaktionsprodukts Schwierigkeiten. Alle vom Polymer verschiedenen Substanzen müssen durch aufwendiges Waschen in verschiedenen Lösemitteln vom PAEK abgetrennt werden (EP-A-0 244 167, EP-A-0 182 648, EP-A-0 297 363, EP-A-0 322 151). Diese Wäschen entsprechen zusätzlich einer fest-flüssig-Extraktion, da sich die Nebenprodukte und das Lösemittel nicht nur um das, sondern auch im festen Polymer befinden; sie benötigen je nach Temperatur, Körnung des Reaktoraustrags, Art des Lösemittels usw. sehr viel Zeit und große Mengen an Waschlösemittel.

Um das PAEK von den Nebenprodukten und dem Lösemittel abzutrennen, werden üblicherweise zweistufige Waschverfahren verwendet. Im ersten Waschschritt werden, beispielsweise mit Ethanol, das Diphenylsulfon aus der Reaktionsmischung entfernt und im zweiten Waschschritt mit Wasser die salzartigen Nebenprodukte, in der Regel NaF und KF. Gemäß dem Stand der Technik wird der zu waschende Reaktoraustrag getrocknet, um in das Waschethanol nicht größere Mengen Wasser einzubringen. Üblicherweise verlaufen die einzelnen Waschschritte bei Normaldruck und Temperaturen knapp unterhalb der Siedetemperatur der verwendeten Lösemittel. Nachteilig ist jedoch, dass nach dem beschriebenen Verfahren der Restgehalt an Natrium, Kalium und Diphenylsulfon nur unzureichend reduziert werden kann, was für einige Anwendungen in der Elektronikindustrie nachteilig ist.

Zwar sind verbesserte zweistufige Waschverfahren bekannt, mit denen der Restgehalt an Verunreinigungen noch weiter reduziert werden kann. Hier werden die einzelnen Waschschritte unter Überdruck durchgeführt, da die Lösemittel über ihren Siedepunkt hinaus erhitzt werden. Diese Verfahren sind jedoch mit dem Nachteil behaftet, dass wegen des Arbeitens bei Überdruck die apparative Ausgestaltung sehr aufwendig ist.

Die Aufgabe der vorliegenden Erfindung bestand darin, ein verbessertes Waschverfahren zu entwickeln, mit dem man die Restgehalte an Salzen und Reaktionslösemittel (im allgemeinen Diphenylsulfon) deutlich reduzieren kann, ohne den apparativen Aufwand in Kauf nehmen zu müssen, der bei Waschverfahren im Überdruckbereich nötig ist.

Diese Aufgabe wurde gelöst durch ein Verfahren gemäß Anspruch 1 zur Herstellung eines Polyarylenetherketons, das folgende Schritte enthält:
a) Umsetzung einer aromatischen Dihalogenverbindung mit einem Bisphenol und/oder eines Halogenphenols in Gegenwart von Alkali- und/oder Erdalkalicarbonat in einem hochsiedenden aprotischen Lösemittel zu einem Polyarylenetherketon,
b) Nasszerkleinerung des erstarrten Reaktionsgemisches in Gegenwart von Wasser,
c) Wäsche mit einem organischen Lösemittel,
d) Wäsche mit Wasser und
e) Trocknen des gewaschenen Produkts,
wobei das nasszerkleinerte Reaktionsgemisch mit einer Restfeuchte von mindestens 1 Gew.-%, mindestens 2 Gew.-%, mindestens 3 Gew.-%, mindestens 4 Gew.-% bzw. mindestens 5 Gew.-% der zweistufigen Wäsche zugeführt wird.

Beispiele geeigneter aromatischer Dihalogenverbindungen sind 4,4'-Difluorbenzophenon, 4,4'-Dichlorbenzophenon, 4,4'-Dichlordiphenylsulfon, 4,4-Difluordiphenylsulfon, 1,4-Bis(4-fluorbenzoyl)benzol, 1,4-Bis(4-chlorbenzoyl)benzol, 4-Chlor-4`-fluorbenzophenon und 4,4'-Bis(4-fluorbenzoyl)biphenyl. Die Halogengruppe ist im Allgemeinen durch eine para-ständige Carbonyl- oder Sulfonylgruppe aktiviert. Im Falle einer para-ständigen Carbonylgruppe ist das Halogen Chlor oder bevorzugt Fluor; im Falle einer para-ständigen Sulfonylgruppe kann das Halogen Fluor oder Chlor sein, wobei wegen ausreichender Reaktivität und niedrigerer Kosten hier im Allgemeinen Chlor als Halogen bevorzugt wird. Es können auch Mischungen verschiedener Dihalogenverbindungen eingesetzt werden.

Beispiele geeigneter Bisphenole sind Hydrochinon, 4,4'-Dihydroxybenzophenon, 4,4'-Dihydroxydiphenylsulfon, 2,2`-Bis(4-hydroxyphenyl)propan, 4,4`-Dihydroxybiphenyl, Bis(4-hydroxyphenyl)ether, Bis(4-hydroxyphenyl)thioether, Bis(4-hydroxynaphthyl)ether, 1,4-, 1,5- oder 2,6-Dihydroxynaphthalin, 1,4-Bis(4-hydroxybenzoyl)benzol, 4,4`-Bis(4-hydroxybenzoyl)biphenyl, 4,4`-Bis(4-hydroxybenzoyl)diphenylether oder 4,4-Bis(4-hydroxybenzoyldiphenylthioether. Selbstverständlich können auch Mischungen verschiedener Bisphenole eingesetzt werden.

Beispiele geeigneter Halogenphenole sind 4-(4`-Chlorbenzoyl)phenol und 4-(4'-Fluorbenzoyl)phenol. Hinsichtlich der Auswahl des Halogens gelten die gleichen Gesichtspunkte wie bei den Dihalogenverbindungen. Selbstverständlich können auch Mischungen verschiedener Halogenphenole oder Mischungen von Halogenphenolen mit einem 1 : 1-Gemisch von aromatischer Dihalogenverbindung und Bisphenol eingesetzt werden. Geeignete Alkali- und Erdalkalicarbonate und -hydrogencarbonate leiten sich von Lithium, Natrium, Kalium, Rubidium, Caesium, Magnesium, Calcium, Strontium oder Barium her. Üblicherweise wird gemäß dem Stand der Technik ein Gemisch aus Natriumcarbonat und Kaliumcarbonat eingesetzt.

Das hochsiedende aprotische Lösemittel ist eine Verbindung der Formel 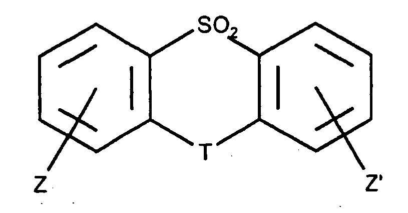 wobei T eine direkte Bindung, ein Sauerstoffatom oder zwei Wasserstoffatome darstellt; Z und Z' sind Wasserstoff oder Phenylgruppen. Bevorzugt handelt es sich hier um Diphenylsulfon.

Das PAEK enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei sollten mindestens 50%, bevorzugt mindestens 70 % und besonders bevorzugt mindestens 80 % der Gruppen X eine Carbonylgruppe darstellen, während mindestens 50 %, bevorzugt mindestens 70 % und besonders bevorzugt mindestens 80 % der Gruppen Y aus Sauerstoff bestehen sollten.

In der insbesondere bevorzugten Ausführungsform bestehen 100 % der Gruppen X aus Carbonylgruppen und 100 % der Gruppen Y aus Sauerstoff. In dieser Ausführungsform kann das PAEK beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

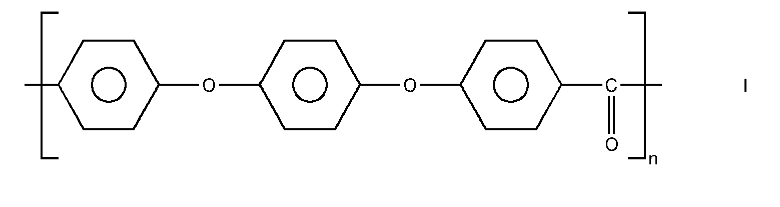

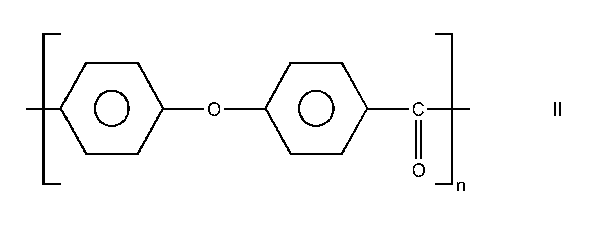

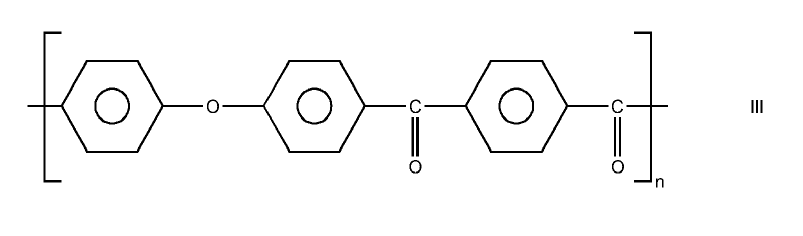

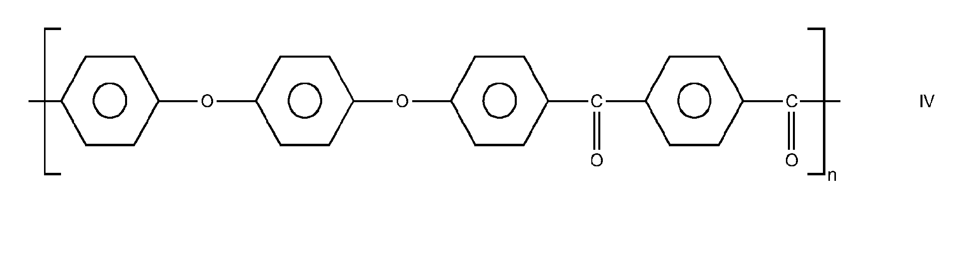

Das PAEK ist im Allgemeinen teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt. Jedoch ist die Lehre der Erfindung auch auf amorphe PAEK anwendbar. Im Allgemeinen gilt, dass Sulfonylgruppen, Biphenylengruppen, Naphthylengruppen oder sperrige Gruppen Y, wie z. B. eine Isopropylidengruppe, die Kristallinität verringern.

Aufgrund der vorgegebenen Reaktivität der funktionellen Gruppen sowie der Schwerlöslichkeit des PAEK bei niedrigeren Temperaturen wird die Reaktion üblicherweise im Temperaturbereich von ca. 200 bis 400 °C durchgeführt, wobei der Bereich von ca. 250 bis 350 °C bevorzugt ist. Weitere Einzelheiten zur Durchführung der Reaktion sind dem oben genannten Stand der Technik zu entnehmen.

Nach Durchführen der Reaktion wird die Reaktionsmischung aus dem Reaktor ausgefahren. Das ausgetragene Reaktionsgemisch wird mit aufgesprühtem und/oder fließendem Wasser abgekühlt und nach Erstarren wasserfeucht in eine Zerkleinerungsapparatur überführt. Dies kann beispielsweise ein Brecher, ein Schroter, eine Mühle oder eine Dispergiereinrichtung sein. Als Brecher, Schroter, Mühle bzw. Dispergiereinrichtung können alle diejenigen eingesetzt werden, die dem Fachmann bekannt sind; beispielsweise sei verwiesen auf Vauck/Müller, Grundoperationen chemischer Verfahrenstechnik, 10. Auflage, Kapitel 5.1. (Zerkleinern), Deutscher Verlag für Grundstoffindustrie, Leipzig 1994. So können beispielsweise Backen-, Rund-, Walzen- oder Prallbrecher für eine Zerkleinerung auf etwa 0,5 bis 50 mm Durchmesser bzw. Prall-, Wälz-, Hammer-, Kugel-, Schwing-, Schneid- oder Strahlmühlen bzw. Dispergiereinrichtungen für eine Zerkleinerung auf etwa 50 bis 500 µm eingesetzt werden.

Der zerkleinerte wasserfeuchte Reaktoraustrag wird gegebenenfalls anschließend, beispielsweise durch Verpressen, Zentrifugieren, Abwaschen eines Teils der Restfeuchte mit z. B. Ethanol oder mit Hilfe einer anderen geeigneten Maßnahme angetrocknet und auf die anspruchsgemäße Restfeuchte gebracht. Anschließend wird er dem zweistufigen Waschprozess zugeführt. Zweckmäßigerweise liegt die Obergrenze für die Restfeuchte bei 30 Gew.-%, 25 Gew.-%, 15 Gew.-%, 12 Gew.-% bzw. 10 Gew.-%.

In beiden Stufen des zweistufigen Waschprozesses kann entweder in einem gerührten Kessel oder in einer gerührten Filternutsche batchweise gewaschen werden (im Folgenden als "Maischwäsche" bezeichnet) oder kontinuierlich in Form einer Drainagewäsche, wobei ein kompakter Filterkuchen von einem Lösemittel kontinuierlich durchströmt wird.

In der ersten Stufe wäscht man mit einem organischen Lösemittel, beispielsweise Aceton, Methylethylketon, Methylisobutylketon, Methanol, Ethanol, Isopropanol, n- oder i-Butanol, 2-Methoxyethanol, 1.2-Dimethoxyethan, Tetrahydrofuran, Ethylacetat, Benzol, Toluol, Xylol sowie Mischungen daraus. Prinzipiell kann aber auch jedes andere geeignete organische Lösemittel verwendet werden.

In der zweiten Stufe wird mit Wasser gewaschen, um die Salze zu entfernen.

Falls in einer oder in beiden Stufen batchweise gewaschen wird, wird die Wäsche jeweils insgesamt ca. 5 bis 15 mal durchgeführt. Führt man weniger Waschschritte durch, kann die Reinigung des Produkts unzureichend sein. Führt man hingegen mehr Waschschritte durch, wird das Verfahren insgesamt sehr aufwendig. Falls bei höherer Temperatur unter Druck gewaschen wird, können jedoch auch nur wenige Waschschritte, beispielsweise 1, 2, 3 oder 4 Waschschritte ausreichend sein.

Gemäß dem Stand der Technik kann die Wasserwäsche eine Wäsche mit einer verdünnten Säure, etwa Salzsäure, Schwefelsäure, Orthophosphorsäure oder insbesondere Pyrophosphorsäure, Polyphosphorsäure, Metaphosphorsäure oder Phosphonsäure beinhalten (DE 42 07 555 A1). Die Säure wird hierbei in einer Konzentration von ca. 0,1 bis 5 Gew.-% eingesetzt. Neben einer noch weiter verbesserten Extraktion anorganischer Bestandteile wird hiermit eine verbesserte Schmelzestabilität des PAEK erzielt.

Nach der Wäsche wird das PAEK getrocknet. Es kann dann in dieser Form direkt verwendet werden, z. B. als Beschichtungsmaterial, es kann aber auch granuliert und hierbei, falls gewünscht, durch Zusatz weiterer Stoffe, wie Füllstoffe, Pigmente, Stabilisatoren, andere Polymere, Verarbeitungshilfsmittel und dergleichen, zu Compounds verarbeitet werden. Geeignete Compounds, ihre Herstellung und Verwendung sind dem Fachmann bekannt.

Das erfindungsgemäß erhaltene PAEK zeichnet sich durch einen besonderes niedrigen Gehalt an anorganischen Bestandteilen sowie Lösemittelresten aus. Es eignet sich besonders für Einsatzzwecke in der Elektronikindustrie sowie überall dort, wo die Oberflächenqualität der Formteile eine Rolle spielt.

Die Erfindung wird im Folgenden beispielhaft erläutert.

### Herstellung von PEEK:

In einem Doppelmantelreaktor wurden bei 60 °C 69,2 kg Diphenylsulfon, 26,2 kg 4.4'-Difluorbenzophenon, 13,2 kg Hydrochinon, 13,2 kg Natriumcarbonat und 640 g Kaliumcarbonat in fester Form nacheinander zugegeben. Der Reaktor wurde verschlossen und mit Stickstoff inertisiert. Nachdem die Manteltemperatur 160 °C erreicht hatte, wurde der Rührer mit 50 upm zugeschaltet. Als die Innentemperatur ebenfalls 160 °C erreicht hatte, wurde langsam auf 320 °C aufgeheizt. Über das Drehmoment, das aus der Stromaufnahme am Rührmotor bestimmt wurde, konnte der Reaktionsverlauf beobachtet werden. Das Drehmoment stieg nach ca. 6 Stunden an und pendelte sich nach weiteren etwa 2 Stunden auf einem konstanten Bereich ca. 55 % über dem Anfangsniveau ein. Das Produkt wurde ausgefahren, mit Wasser abgekühlt und in einem Schroter zerkleinert. Die Restfeuchte im zerkleinerten Reaktoraustrag betrug ca. 20 Gew.-%.

Vergleichsbeispiel 1 (Stand der Technik; Reaktoraustrag auf Massekonstanz getrocknet): 5 kg des oben erhaltenen zerkleinerten, wasserfeuchten Reaktoraustrags wurden in einem Vakuumschrank bei 100 °C und ca. 100 mbar 12 Stunden bis zur Massekonstanz getrocknet. Danach wurde der getrocknete Reaktoraustrag in eine gerührte Filternutsche überführt, zehnmal mit jeweils 15 Litern Ethanol (je 1 Stunde bei 75 °C) und danach zehnmal mit jeweils 15 Litern deionisiertem Wasser (je 1 Stunde bei 95 °C) der zweistufigen Wäsche unterzogen. Die vierte der 10 Wasserwäschen wurde hierbei mit 15 Litern 0,5%iger wässriger Orthophosphorsäure durchgeführt.

Das erhaltene gereinigte PEEK wurde getrocknet und auf die Verunreinigungen mit AAS (Atomabsorptionsspektroskopie), ICP-OES (inductively coupled plasma optical emission spectroscopy) und Elementaranalyse untersucht.
Na-Gehalt: 40 ppm
K-Gehalt: 5 ppm
S-Gehalt: 410 ppm

### Vergleichsbeispiel 2 (Stand der Technik; Reaktoraustrag auf Massekonstanz getrocknet):

5 kg des oben erhaltenen zerkleinerten, wasserfeuchten Reaktoraustrags wurden in einem Vakuumschrank bei 100 °C und ca. 100 mbar 12 Stunden bis zur Massekonstanz getrocknet. Danach wurde der getrocknete Reaktoraustrag in eine gerührte Filternutsche überführt. Ethanol wurde von oben in die Filternutsche eingeführt; die Suspension wurde 15 Minuten lang bei Raumtemperatur aufgerührt. Nachdem sich der Feststoff wieder abgesetzt hatte, wurden insgesamt 150 Liter Ethanol bei 75 °C innerhalb von 8 Stunden durch den Feststoff geleitet. Nach Abschluss dieser ersten Drainagewäsche mit Ethanol wurde die Prozedur mit Wasser wiederholt. Hierbei wurde Wasser von oben in die Filternutsche eingeführt und die Suspension wurde 15 Minuten bei 40 °C aufgerührt. Nachdem sich der Feststoff wieder abgesetzt hatte, wurden zunächst 75 Liter deionisiertes Wasser, dann 10 Liter 0,5%ige wässrige Orthophosphorsäure sowie anschließend weitere 75 Liter deionisiertes Wasser ohne Unterbrechung des Elutionsstroms innerhalb von insgesamt 9 Stunden bei 95 °C durch den Feststoff geleitet.

Das erhaltene, gereinigte PEEK wurde getrocknet und auf die Verunreinigungen mit AAS, ICP-OES und Elementaranalyse untersucht.
Na-Gehalt: 150 ppm
K-Gehalt: 4 ppm
S-Gehalt: 420 ppm

### Beispiel 1:

5 kg des oben erhaltenen zerkleinerten, wasserfeuchten Reaktoraustrags wurde in einer Zentrifuge bei 1000 upm entwässert. Die Restfeuchte nach dem Zentrifugieren betrug ca. 5 Gew.-%. Danach wurde der feuchte Reaktoraustrag in eine gerührte Filternutsche überführt, zehnmal mit jeweils 15 Litern Ethanol (je 1 Stunde bei 75 °C) und danach zehnmal mit jeweils 15 Litern deionisiertem Wasser (je 1 Stunde bei 95 °C) der zweistufigen Wäsche unterzogen. Die vierte der 10 Wasserwäschen wurde hierbei mit 15 Litern 0,5%iger wässriger Orthophosphorsäure durchgeführt.

Das erhaltene gereinigte PEEK wurde getrocknet und auf die Verunreinigungen mit AAS, ICP-OES und Elementaranalyse untersucht.
Na-Gehalt: 15 ppm
K-Gehalt: <1 ppm
S-Gehalt: 180 ppm

### Beispiel 2:

5 kg des oben erhaltenen zerkleinerten, wasserfeuchten Reaktoraustrags wurde in einer Zentrifuge bei 1000 upm entwässert. Die Restfeuchte nach dem Zentrifugieren betrug ca. 5 Gew.-%. Danach wurde der feuchte Reaktoraustrag in eine gerührte Filternutsche überführt. Ethanol wurde von oben in die Filternutsche eingeführt; die Suspension wurde 15 Minuten lang bei Raumtemperatur aufgerührt. Nachdem sich der Feststoff wieder abgesetzt hatte, wurden insgesamt 150 Liter Ethanol bei 75 °C innerhalb von 8 Stunden durch den Feststoff geleitet. Nach Abschluss dieser ersten Drainagewäsche mit Ethanol wurde die Prozedur mit Wasser wiederholt. Hierbei wurde Wasser von oben in die Filternutsche eingeführt und die Suspension wurde 15 Minuten bei 40 °C aufgerührt. Nachdem sich der Feststoff wieder abgesetzt hatte, wurden zunächst 75 Liter deionisiertes Wasser, dann 10 Liter 0,5%ige wässrige Orthophosphorsäure sowie anschließend weitere 75 Liter deionisiertes Wasser ohne Unterbrechung des Elutionsstroms innerhalb von insgesamt 9 Stunden bei 95 °C durch den Feststoff geleitet.
Das erhaltene, gereinigte PEEK wurde getrocknet und auf die Verunreinigungen mit AAS, ICP-OES und Elementaranalyse untersucht.
Na-Gehalt: 10 ppm
K-Gehalt: <1 ppm
S-Gehalt: 160 ppm

### Beispiel 3:

5 kg des oben erhaltenen zerkleinerten, wasserfeuchten Reaktoraustrags wurde in eine Filternutsche überführt, mit 10 Litern Ethanol übergossen und damit die Oberflächenfeuchte zum größten Teil abgewaschen. Anschließend wurde wie im Beispiel 1 weitergearbeitet.

Das erhaltene, gereinigte PEEK wurde getrocknet und auf die Verunreinigungen mit AAS, ICP-OES und Elementaranalyse untersucht.
Na-Gehalt: 10 ppm
K-Gehalt: <1 ppm
S-Gehalt: 120 ppm

### Beispiel 4:

5 kg des oben erhaltenen zerkleinerten, wasserfeuchten Reaktoraustrags wurde in eine Filternutsche überführt, mit 10 Litern Ethanol übergossen und damit die Oberflächenfeuchte zum größten Teil abgewaschen. Anschließend wurde wie im Beispiel 2 weitergearbeitet.

Das erhaltene, gereinigte PEEK wurde getrocknet und auf die Verunreinigungen mit AAS, ICP-OES und Elementaranalyse untersucht.
Na-Gehalt: 10 ppm
K-Gehalt: <1 ppm
S-Gehalt: 95 ppm

## Patentansprüche

1. Verfahren zur Herstellung eines Polyarylenetherketons, das folgende Schritte enthält:
a) Umsetzung einer aromatischen Dihalogenverbindung mit einem Bisphenol und/oder eines Halogenphenols in Gegenwart von Alkali- und/oder Erdalkalicarbonat in einem hochsiedenden aprotischen Lösemittel der Formel 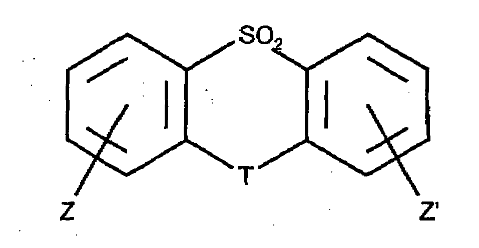 wobei T eine direkte Bindung, ein Sauerstoffatom oder zwei Wasserstoffatome darstellt und Z und Z' Wasserstoff oder Phenylgruppen sind, zu einem Polyarylenetherketon,
b) Nasszerkleinerung des erstarrten Reaktionsgemisches in Gegenwart von Wasser,
c) Wäsche mit einem organischen Lösemittel,
d) Wäsche mit Wasser und
e) Trocknen des gewaschenen Produkts,
**dadurch gekennzeichnet,**
**dass** das nasszerkleinerte Reaktionsgemisch mit einer Restfeuchte von mindestens 1 Gew.-% der zweistufigen Wäsche zugeführt wird.

2. Verfahren gemäß Anspruch 1,
**dadurch gekennzeichnet,**
**dass** das hochsiedende aprotische Lösemittel Diphenylsulfon ist.

3. Verfahren gemäß einem der Ansprüche 1 und 2,
**dadurch gekennzeichnet,**
**dass** das Polyarylenetherketon ein PEEK, ein PEK, ein PEKK oder ein PEEKK ist.

4. Verfahren gemäß einem der vorhergehenden Ansprüche,
**dadurch gekennzeichnet,**
**dass** die Wasserwäsche eine Wäsche mit einer verdünnten Säure beinhaltet.

5. Verfahren gemäß Anspruch 4,
**dadurch gekennzeichnet,**
**dass** die Säure ausgewählt ist aus der Gruppe Salzsäure, Schwefelsäure, Orthophosphorsäure, Pyrophosphorsäure, Polyphosphorsäure, Metaphosphorsäure oder Phosphonsäure.

## Claims

1. Process for preparing a polyarylene ether ketone, containing the following steps:
a) reacting an aromatic dihalogen compound with a bisphenol and/or a halophenol in the presence of alkali metal carbonate and/or alkaline earth metal carbonate in a high-boiling aprotic solvent of the formula 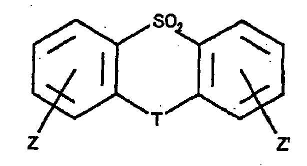 where T is a direct bond, one oxygen atom or two hydrogen atoms and Z and Z' are each hydrogen or phenyl groups, to give a polyarylene ether ketone,
b) wet-comminuting the solidified reaction mixture in the presence of water,
c) washing with an organic solvent,
d) washing with water and
e) drying the washed product,
**characterized in that**
the wet-comminuted reaction mixture is fed to the two-stage washing with a residual moisture content of at least 1% by weight.

2. Process according to Claim 1,
**characterized in that**
the high-boiling aprotic solvent is diphenyl sulfone.

3. Process according to either of Claims 1 and 2,
**characterized in that**
the polyarylene ether ketone is a PEEK, a PEK, a PEKK or a PEEKK.

4. Process according to any one of the preceding claims,
**characterized in that**
the water wash includes a wash with a dilute acid.

5. Process according to Claim 4,
**characterized in that**
the acid is selected from the group of hydrochloric acid, sulfuric acid, orthophosphoric acid, pyrophosphoric acid, polyphosphoric acid, metaphosphoric acid and phosphonic acid.

## Revendications

1. Procédé pour la préparation d'une polyarylénéthercétone, qui comprend les étapes suivantes :
a) transformation d'un composé aromatique dihalogéné avec un bisphénol et/ou un halogénophénol en présence de carbonate de métal alcalin et/ou alcalino-terreux dans un solvant aprotique à point d'ébullition élevé, de formule 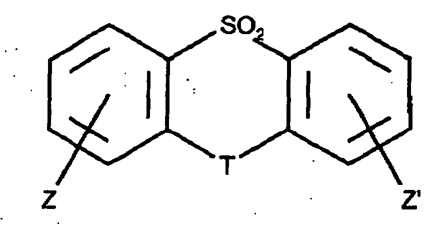 où T représente une liaison directe, un atome d'oxygène ou deux atomes d'hydrogène et Z et Z' représentent hydrogène ou des groupes phényle, en une polyarylénéthercétone,
b) broyage humide du mélange réactionnel solidifié en présence d'eau,
c) lavage avec un solvant organique,
d) lavage avec de l'eau et
e) séchage du produit lavé,
**caractérisé en ce que** le mélange réactionnel broyé humide est introduit avec une humidité résiduelle d'au moins 1% en poids dans le lavage en deux étapes.

2. Procédé selon la revendication 1, **caractérisé en ce que** le solvant aprotique à point d'ébullition élevé est la diphénylsulfone.

3. Procédé selon l'une quelconque des revendications 1 à 2, **caractérisé en ce que** la polyarylénéthercétone est une PEEC, une PEC, une PECC ou une PEECC.

4. Procédé selon l'une quelconque des revendications précédentes, **caractérisé en ce que** le lavage à l'eau comporte un lavage avec un acide dilué.

5. Procédé selon la revendication 4, **caractérisé en ce que** l'acide est choisi dans le groupe formé par l'acide chlorhydrique, l'acide sulfurique, l'acide orthophosphorique, l'acide pyrophosphorique, l'acide polyphosphorique, l'acide métaphosphorique ou l'acide phosphonique.
